# EUROPEAN PATENT APPLICATION

(11) **EP 2 475 140 A2**
(43) Date of publication of application: **11.07.2012**
(21) Application number: 12001987.2
(22) Date of filing: 24.04.2009
(51) Int. Cl.: H04L 27/00, H04L 27/26, H04W 56/00

(54) **Systems and methods for doppler shift compensation in ofdma communications**

(30) Priority: 25.04.2008 US 10971; 21.01.2009 US 356750
(62) Divisional of application: 09734643.1
(71) Applicant: ADC Telecommunications, Inc., Eden Prairie, MN 55344 (US)
(72) Inventor: Roberts, Harold A., Prior Lake, MN 55372 (US)
(74) Representative: Beresford, Keith Denis Lewis

(57) **Abstract**

Systems and methods for determining the relative velocity of a subscriber station with respect to a basestation are provided. In one embodiment, the method comprises sending a query message from a basestation to a subscriber station, the query message requesting a current modulation frequency used by the subscriber station to modulate transmissions; receiving a response to the query message, the response including the current modulation frequency; determining an offset between the current modulation frequency and a target carrier frequency value; and calculating a velocity of the subscriber station based on the offset.

## Description

### CROSS REFERENCE TO RELATED CASES

This application is a continuation of application Serial No. 12/109,771 filed on April 25, 2008, entitled "SYSTEMS AND METHODS FOR DOPPLER SHIFT COMPENSATION IN OFDMA COMMUNICATFONS" (currently pending), which is incorporated herein by reference and to which this application claims priority.

### BACKGROUND

Orthogonal Frequency Division Multiple Access (OFDMA) systems (such as described by IEEE 802.16e, WiMAX, and LTE) are moderately susceptible to Doppler shift degradation. For WiMAX/802.16e in particular, the specifications state the carrier frequency must be accurate to 2% of the sub-carrier spectral width. For WiMAX the sub-carrier is 10.94kHz wide. Therefore the carrier frequency accuracy must be 10.94kHz x 0.02 = 218Hz. If the carrier frequency is not this accurate, the modulation error ratio (MER), which is a measurement of the quality of the signal, will degrade. If the modulation error ratio (MER) degrades the OFDMA signal will not be able to carry as much information.

One commonly accepted method for handling Doppler shift is to reduce the modulation complexity such that the degradation to MER will not cause errors (for example dropping from QAM64 (6 bits per symbol) to QPSK (2 bits per symbol). The disadvantage with this method is that the reduced efficiency and reduced bandwidth does not effect just the mobile subscriber but other subscribers without Doppler shift as multiple subscribers will be transmitting on adjacent sub-channels and the Doppler shifted sub-cattlers will interfere with the non-shifted sub-carriers due to the degradation of the orthogonality of the sub-carriers due to the carrier error. In fact this is called ICI or Inter-Carrier Interference. Another method (discussed in "Synchronization Techniques for OFDMA" by Morelli et at in Proceedings of the IEEE, Vol. 95, No. 7, July 2007) requires the base station receiver to adapt to the carrier frequency offset of specific sub-channels. This does not, however, eliminate the ICI and may require use of vacant sub-carriers as guard bands between sub-channels.

For the reasons stated above and for other reasons stated below which will become apparent to those skilled in the art upon reading and understanding the specification, there is a need in the art for improved systems and methods for Doppler shift compensation in OFDMA communications.

### SUMMARY

The Embodiments of the present invention provide methods and systems for Doppler shift compensation in OFDMA communications and will be understood by reading and studying the following specification.

Systems and methods for determining the relative velocity of a subscriber station with respect to a basestation are provided. In one embodiment, the method comprises sending a query message from a basestation to a subscriber station, the query message requesting a current modulation frequency used by the subscriber station to modulate transmissions; receiving a response to the query message, the response including the current modulation frequency; determining an offset between the current modulation frequency and a target carrier frequency value; and calculating a velocity of the subscriber station based on the offset.

### BRIEF DESCRIPTION OF THE DRAWINGS

Embodiments of the present invention can be more casily understood and further advantages and uses thereof more readily apparent, when considered in view of the description of the preferred embodiments and the following figures in which:
Figures 1A, 1B, and 1C, illustrate a bidirectional communication system 100 of one embodiment of the present invention;
Figure 2 is a flowchart illustrating a method of one embodiment of the present invention;
Figure 3 is a flowchart illustrating a method of one embodiment of the present invention;
Figure 4 is a flowchart illustrating a method of one embodiment of the present invention; and
Figures 5-7 are flowcharts of alternate embodiments of the present invention illustrating methods for determining the relative velocity of a subscriber station with respect to a basestation.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

This disclosure describes systems and methods for Adaptive Ranging that can be used to minimize the use of the ranging resources used for Doppler shift mitigation.

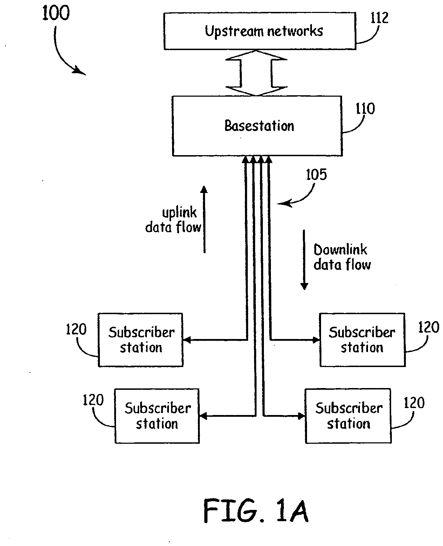

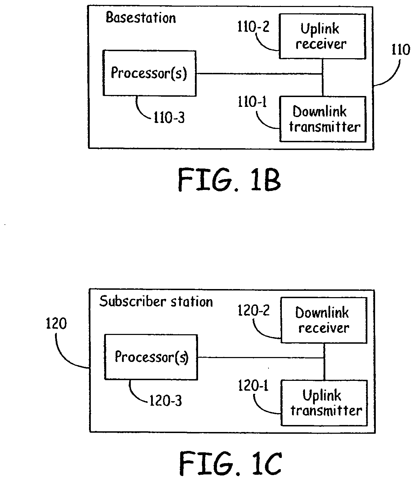

Figures 1A, 1B and 1C illustrate a bidirectional communication system 100 of one embodiment of the present invention. System 100 includes a bascstation 110 that is in communication with one or more upstream networks 112. System 100 also includes one or more subscriber stations 120 wirelessly coupled to basestation 110. System 100 utilizes a multiple access scheme commonly referred to as orthogonal frequency division multiple access (OFDMA). That is, each of the one or more subscriber stations 120 are assigned a subsets of subcarriers of a single multicarrier orthogonal frequency division multiplexing (OFDM) waveform (105) that is shared by the subscriber stations 120 for communicating with bascstation 110. A WiMAX (IEEE 802.16c) system is one example of such an orthogonal frequency division multiple access system. An LTE (Long Term Evolution) system is another example.

Basestation 110 includes transmitters (110-1), receivers (110-2), processors (110-3) and other functionalities required to modulate and demodulate OFDM signals and communicate synchronization and other control instructions to one or more subscriber stations 120 in order to facilitate OFDMA communication. Basestation 110 also includes those functionalities and interfaces required to convey data between the one or more subscriber stations 120 and the one or more upstream networks 112. Each of the one or more subscriber stations 120 also include transmitters (120-1), receivers (120-2), processors (120-3) and other functionalities required to modulate and demodulate OFDM signals and adjust OFDM transmissions based on synchronization instructions received from the basestation 110. In one embodiment, system 100 implements a process often referred to as "ranging" in order to achieve synchronization of the one or more subscriber stations 120 to achieve a coherent unified OFDM waveform at the basestation 110 from the combined OFDM transmission of the one or more subscriber stations t20. A typical ranging process includes compensating for one or more of symbol timing, carrier frequency, and signal amplitude errors in upstream OFDM transmissions from the one or more subscriber stations 120 to the basestation 110. As the term is used in this specification, the ranging process includes at least identifying carrier frequency errors in upstream OFDM transmissions and sending frequency adjustment instructions to subscriber stations as needed to correct for carrier frequency errors. In one embodiment, carrier frequency errors are determined by a basestation based on predefined ranging patterns transmitted by subscriber stations and received at the basestation.

In the downlink (that is, downstream transmissions from the basestation 110 to the one or more subscriber stations 120) a carrier emanates from a single point source, the basestation 110. The subscriber stations 120 are required and able to lock to the downlink carrier frequency through commonly understood acquisition and tracking techniques. In addition, since WiMAX (and other OFDMA systems) requires the basestation 110 to lock the downlink and uplink (that is, upstream transmissions from the one or more subscriber stations 120 to basestation 110) carrier frequencies to a 'master clock', the subscriber stations 120 can derive the uplink carrier frequency from the downlink carrier frequency. In the case of time division duplex (TDD) operation, the uplink and downlink frequencies are, in fact, the same. In the case of frequency division duplex (FDD) operation, the subscribers must derive the uplink frequency via a known mathematical relationship with the downlink frequency.

In a static environment, where subscriber stations 120 do not move relative to the basestation 110, the uplink carrier frequency for the subscriber stations 120 is precisely locked to the basestation 110 receiver demodulation carrier frequency and no adjustment is necessary. In a mobile environment however, the downlink and uplink frequencies are shifted by the Doppler shift according to Δf = f*v/c. For example, for the case of 6GHz transmission at 125km/hr, Δf = (6* 10⁹Hz *(125* 10³m/(60min*60sec))) /3 *10⁸m/s = 694Hz.

A downlink receiver in the subscriber stations 120 can track this Doppler shift in the downlink carrier frequency, but the shift will also be duplicated in the uplink because the uplink is derived from the downlink as per WiMAX specifications. In addition, the uplink carrier frequency will be shifted by an additional Δf due to the relative motion of the subscriber stations 120 away or towards the bascstation 110. In the example above the shift will be 2Δf = 1,38Hz. Therefore the uplink Doppler shift will be approximately 6 times the carrier frequency shift allowed.

The WiMAX specifications for OFDMA requires that the subscriber stations 120 not only use the downlink carrier to derive the uplink carrier but to also adjust carrier frequency based on 'Range Response' (RNG-RSP) messages from the basestation 110 with any carrier frequency errors measured by the basestation 110. However, if one of the subscriber stations 120 is quickly accelerating towards or away from the basestation 110, the Doppler shift will be dynamically changing- a situation for which the WiMAX specification provides no adequate solutions.

For Example, assume one of subscriber stations 120 is traveling a constant velocity in a vehicle that must make a sudden stop. If we assume high speed braking the vehicle may decelerate from 125km/hr to 0km/hr in, for example, 6 seconds. To maintain no more than 2% sub-carrier error, the RNG-RSP adjustments will have to be made approximately once per second. More broadly applying this example to the case where multiple subscriber stations are mobile, if all subscriber stations 120s must range once per second, this burden places an undue strain on the resources for ranging.

Adaptive Ranging as provided by embodiments of the present invention addresses Doppler compensation in OFDMA systems without creating undue strain on the resources for ranging. The adaptive ranging methods and system utilize adaptive carrier frequency ranging periods. That is, the carrier frequency ranging periods used by the basestation are adaptive in that they are dynamically adjusted based on current conditions with respect to a subscriber unit, such as the velocity of the subscriber unit or a measured carrier frequency error.

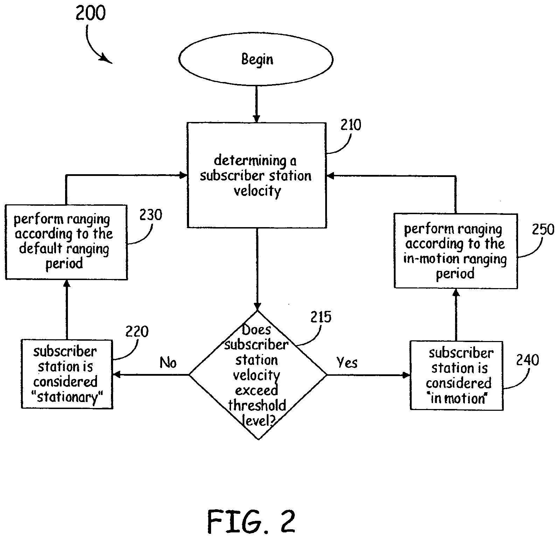

Figure 2 is a flowchart illustrating one method 200 of adaptive ranging of one embodiment of the present invention. Method 200 illustrates a long cycle ranging period method for Doppler correction. Under method 200, adaptive ranging increases the frequency of the ranging process only for subscriber stations that experience high Doppler shifts.

Due to the more dynamic nature of mobile wireless system, it is likely that an OFDMA system, such as system 100, would start with a more rapid periodic ranging than a system where subscriber stations are always stationary. In a system with mobile subscriber stations, the largest accelerations for subscriber stations arc likely to be fast braking in vehicles rather than positive accelerations. This is because braking horsepower in automobiles is generally larger than engine horsepower.

Therefore, one indication that a faster ranging period may be necessary is whether a subscriber station is going at a high rate of speed. A subscriber station that is moving is more likely to change acceleration than one that is not. Unless a subscriber station is accelerating, it is unnecessary to keep ranging for Doppler shift. Therefore, method 200 begins at 210 with determining a subscriber station's velocity.

Many OFDMA systems, such as WiMAX, can accommodate lower speeds (such as up to 60km/hr, for example) without degrading to the point where Doppler compensation is required. If a system can compensate for a 60kph change without any need for Doppler compensation, then there is no need to perform any ranging for Doppler purposes below that threshold level, although optional frequency corrections during periodic ranging may be performed. That is, for any subscriber station having a velocity below the threshold level (determined at 215), the subscriber station is defined as being stationary (shown at 220). That is, a subscriber station having a velocity below the threshold level is considered stationary even though it may have a non-zero velocity. As long as the subscriber station's velocity remains below the threshold level, method 200 proceeds to 230 and continues to perform ranging according to the standard default ranging period (once every ten seconds, for example) even when a frequency error is measured. The method will instruct the subscriber station to compensate for frequency errors as necessary as part of the ranging process, but will stay with the long cycle default ranging period.

When the velocity of a subscriber station increases to exceed the threshold level (determined at 215), the subscriber station is defined to be "in motion" or "moving" (shown at 240), method 200 switches over to performing ranging function at the in-motion ranging period for moving subscriber stations (shown at 250).

The in-motion ranging period may be based on a design based on the worst case acceleration event (that is, the worst case design basis acceleration event the system is designed to handle). For instance, the example above discussed one possible worst case acceleration event as a case of high speed braking wherein a vehicle decelerates from 125km/hr to 0km/hr in 6 seconds. For this worst case acceleration event, to maintain no more than 2% sub-carrier error, the in-motion ranging period would be set to approximately once per second. One of ordinary skill in the art upon reading this specification would appreciate that in-motion ranging periods for other specified worst case acceleration events can be readily calculated.

One of ordinary skill in the art would appreciate that at any one time, one or more of the subscriber stations in communication with a basestation may have velocities that exceed the threshold level while other subscriber stations may have velocities below the threshold level. Thus, a basestation that performs individual ranging processes utilizing different ranging periods for each of the different subscriber units in communication with the basestation is contemplated as within the scope of embodiments of the present invention.

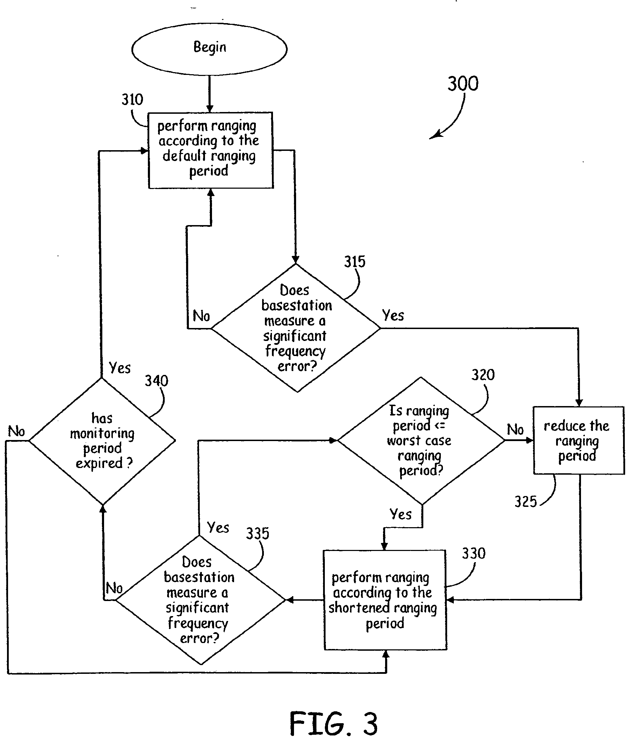

In an alternate embodiment of adaptive ranging, illustrated in Figure 3, a method 300 considers historical large changes in carrier frequency error for a subscriber station to dynamically determine the in-motion ranging period for that subscriber station. Method 300 illustrates a fast attack low decay method for Doppler correction. The method begins at 310 with performing ranging according to the default ranging period (for example, 10 seconds), which includes measuring the frequency error of a subscriber station. That is, as part of the ranging process, the basestation measures the frequency error of an upstream OFDM signal received from the subscriber station. If the basestation does not measure any significant frequency error (determined at 315) (an error in excess of a predetermined limit such as 2% sub-canier error, for example) the method returns to 310 and continues with its ranging procedures at the default ranging period. When the basestation does measure a significant error in frequency (determined at 315), the basestation proceeds to 325 and reduces the ranging period to a shortened time period less than the default ranging period (for example, 2.5 seconds). The method proceeds to 330 with performing ranging according to the shortened ranging period. If the basestation continues to measure a significant error in frequency (determined at 335), the basestation will return to 325 and reduce the ranging period to a still shorter time interval (for example, 1 second). The basestation will continue to reduce the ranging period until the ranging period reaches the ranging period for the system's design basis worst case acceleration event. As shown in Figure 3, before returning to 325 to reduce the ranging period to a still shorter time interval, the method checks to see if the current ranging period is less than or equal to the worst case ranging period assumed in the design of the system (determined at 320). The worst case ranging period would be the ranging period required for the system to successfully handle a design basis worst case acceleration event and would be the shortest ranging period. If the current ranging period is less than or equal to the worst case ranging period, the method bypasses block 325 and proceeds to block 330.

Once the basestation is no longer measuring any significant frequency error, the basestation method 300 maintains the current ranging period for a predefined monitoring period. If no significant frequency errors are measured during that time (determined at 340), the method returns to 310 and restores the ranging period back to the default ranging period. In restoring the ranging period, the ranging period may be reset directly back to the default ranging period or optionally may be restored back to the default ranging period in several incremental steps over a period of time.

In another embodiment, the long cycle ranging period method of method 200 is combined with the fast attack low decay method of method 300 by only reducing the ranging period when a subscriber station is going faster than the threshold velocity AND has a frequency error history that indicates recent rapid changes in speed. For example, with this method when any significant errors in carrier frequency are detected, the basestation puts the subscriber stations in a fast ranging queue and keeps the subscriber stations in that queue until the error detected is within acceptable levels for multiple ranging iterations. Once a set number of iterations are detected with low error those subscriber stations can be put back into a slow ranging queue.

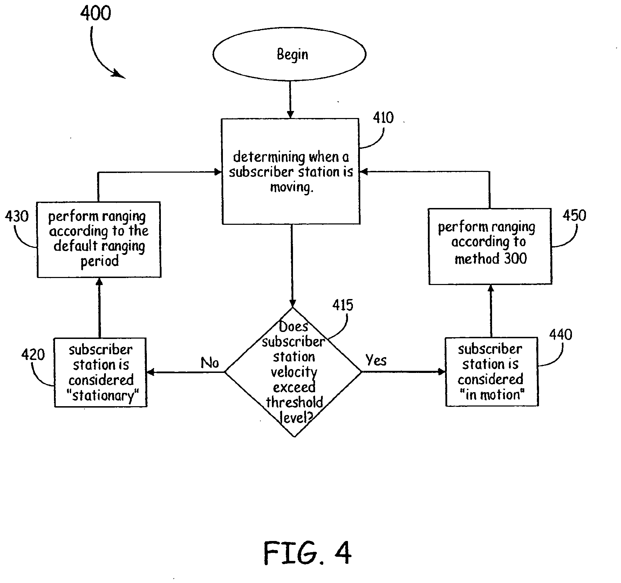

One such embodiment is illustrated by method 400 in Figure 4. The method begins at 410 with determining a subscriber station's velocity.

For any subscriber station having a velocity below the threshold level (determined at 415), the subscriber station is defined as being stationary (shown at 420). That is, a subscriber station having a velocity below the threshold level is considered stationary even though it may have a non-zero velocity. In one embodiment, bascstation keeps track of all stationary subscriber stations in a slow ranging queue. As long as a subscriber station's velocity is below the threshold level, method 400 proceeds to 430 and continues to perform ranging for that subscriber station according to the standard default ranging period even when a frequency error is measured. When the velocity of a subscriber station increases to exceed the threshold level (determined at 415), the subscriber station is defined to be "in motion" or "moving" (shown at 440). Method 400 proceeds to 450 to perform ranging for any moving subscriber stations as described with respect to method 300. In cases where the velocity of a particular subscriber station cannot be determined for whatever reason, a basestation can default to the fast attack method of Figure 3 for that particular subscriber station.

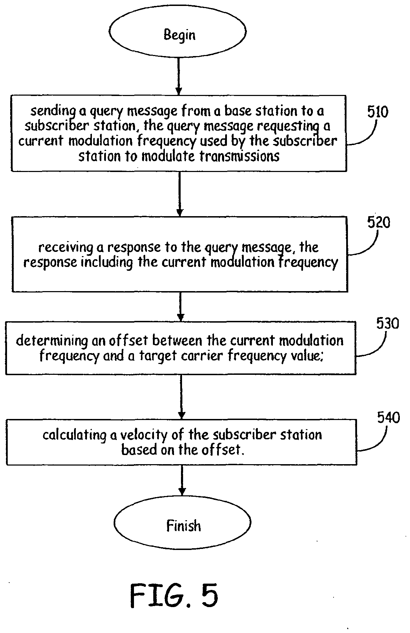

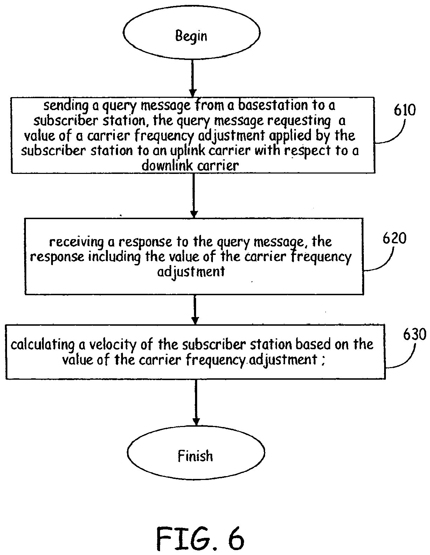

There are several ways to accomplish the task of determining the relative velocity of a subscriber station with respect to a basestation. For example, in one embodiment (illustrated by the flowchart in Figure 5), a subscriber station stores in a queryable memory (a queryable management information base (MIB), for example) the current frequency of the carrier the subscriber station is using to modulate transmissions. If access to the memory is available to a basestation (via a subscriber MIB query (block 510), for example) then the basestation can get that information (block 520) and translate the offset between the currently tuned carrier frequency value and the target carrier frequency value (block 530) and calculate the velocity of the subscriber station (block 540). Alternatively (see, Figure 6), in time division duplex (TDD) system, a subscriber will typically lock its uplink carrier frequency to a downlink carrier received from the basestation. If the subscriber station does not have the absolute frequency of the uplink carrier the subscriber is modulating, it will have the carrier frequency adjustment it is making to the uplink carrier with respect to the downlink carrier. This information can be provided back to the basestation by query (see blocks 610-620) or other means. The carrier frequency adjustment may them be used by the basestation to calculate subscriber velocity (Block 630). Generally, in frequency division duplex (FDD) systems the uplink carrier frequency is based on a predefined mathematical relationship to the downlink carrier frequency rather than a one-to-one lock to the downlink carrier frequency. In this case, carrier frequency adjustment information can similarly be provided back to the basestation by query or other means and used by the basestation to calculate subscriber velocity.

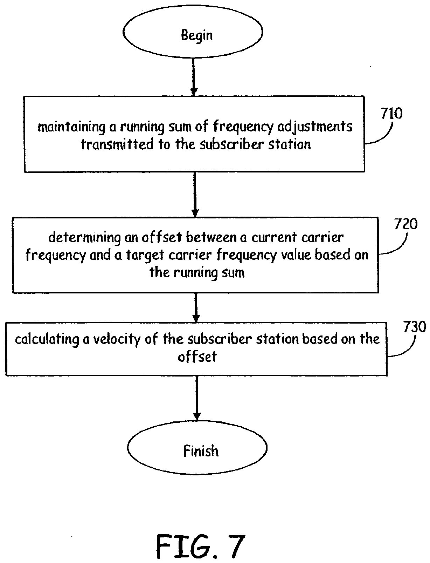

In another embodiment (see Figure 7), a basestation keeps track of a running sum of frequency adjustments sent to each subscriber station (block 710). This running sum would represent the offset between the currently tuned carrier frequency in use by the subscriber station and the target carrier frequency for the subscriber station (block 720). This offset would also readily translate into the velocity of the subscriber station (730). In another embodiment, a subscriber station may keep track of its position based off a satellite positioning system such as a Global Positioning System (GPS) receiver. When this position information is available to the basestation, the basestation can calculate the velocity of the subscriber station by noting changes in subscriber station's position over time.

Several means are available to implement the systems and methods of the current invention as discussed in this specification. These means include, but are not limited to, digital computer systems, digital signal processors, microprocessors, general purpose computers, programmable controllers and field programmable gatc arrays. For example, the methods of Figures 2, 3 and 4 could each be programmed as algorithms resident on bascstation 110 of system 100. Therefore other embodiments of the present invention arc program instructions resident on computer readable storage media which when implemented by such controllers, enable the controllers to implement embodiments of the present invention. Computer readable storage media include any form of computer memory storage devices, including but not limited to punch cards, magnetic disk or tape, any optical data storage system, flash read only memory (ROM), non-volatile ROM, programmable ROM (PROM), erasable-programmable ROM (E-PROM), random access memory (RAM), or any other form of permanent, semi-permanent, or temporary memory storage system or device. Program instructions include, but arc not limited to computer-executable instructions executed by computer system processors and hardware description languages such as Very High Speed Integrated Circuit (VHSIC) Hardware Description Language (VHDL).

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

This disclosure includes all the subject matter recited in the following clauses:
1. A system for orthogonal frequency division multiple access communication, the system comprising:
   a basestation for communicating with a plurality of subscriber units using orthogonal frequency division multiple access;
   wherein the basestation performs a ranging process with the plurality of subscriber units at a periodicity based on adaptive carrier frequency ranging periods;
   wherein the basestation performs measurements of transmissions received from the plurality of subscriber stations, the measurements indicative of Doppler Shift frequency errors; and
   wherein the adaptive carrier frequency ranging periods are adjusted based on the measurements.
2. The system of clause I, the basestation further comprising:
   wherein when the basestation determines that a first subscriber station of the plurality of subscriber stations does not have a velocity exceeding a threshold level, the processor performs the ranging process for the first subscriber station according to a default ranging period; and
   wherein when the data processor determines that the first subscriber station does have a velocity exceeding the threshold level, the processor performs the ranging process for the first subscriber station according to an in-motion ranging period, the in-motion ranging period being shorter than the default ranging period.
3. A basestation for an orthogonal frequency division multiple access (OFDMA) communication system, the basestation comprising:
   a downlink transmitter for transmitting downlink signals to one or more subscriber stations;
   an uplink receiver for receiving an orthogonal frequency division multiplexing (OFDM) waveform comprising uplink signals from the one or more subscriber stations; and
   a processor that determines when a first subscriber station of the one of more subscriber stations has a velocity exceeding a threshold level;
   wherein when the data processor determines that the first subscriber station does not have a velocity exceeding the threshold level, the processor performs a ranging process according to a default ranging pcriod;
   wherein when the data processor determines that the first subscriber station docs have a velocity exceeding the threshold level, the processor performs a ranging process according to an in-motion ranging period, the in-motion ranging period being shorter than the default ranging period.
4. The basestation of clause 3, wherein the in-motion ranging period is based on a worst case acceleration event ranging period.
5. The bascstation of clause 3, wherein the in-motion ranging period is less than the default ranging period and greater than a worst case acceleration ranging period
6. The basestation of clause 3 , wherein the processor determines a carrier frequency error of and ODFM signal received at the receiver from the first subscriber station during the ranging process.
7. The bascstation of clause 3, wherein the processor causes the transmitter to transmit a carrier frequency adjustment instruction to the first subscriber station during the ranging process.
8. The basestation of clause 3, wherein the data processor determines a carrier frequency error of an upstream OFDM signal received by the uplink receiver from the first subscriber station; and
   wherein the data processor calculates the in-motion ranging period based on historical changes in carrier frequency error.
9. A method for Doppler shift compensation in OFDMA communications, the method comprising:
   determining when a subscriber station has a velocity exceeding a threshold value;
   when the subscriber station has a velocity not exceeding the threshold level, performing a ranging process according to a default ranging period; and
   when the subscriber station has a velocity exceeding the threshold level, performing the ranging process according to an in-motion ranging period.
10. The method of clause 9, wherein performing the ranging process according to an in-motion ranging period comprises performing the ranging process more frequently than the default ranging period.
11. The method of clause 9 , wherein performing the ranging process comprises:
   determining a frequency error of an upstream OFDM signal received from the subscriber station; and
   transmitting a frequency adjustment instruction to the subscriber station.
12. The method of clause 9, further comprising:
   dynamically determining the in-motion ranging period based on historical changes in carrier frequency error.
13. The method of clause 9, further comprising:
   reducing the in-motion ranging period when the basestation measures a frequency error exceeding a predetermined limit.
14. The method of clause 9, wherein performing the ranging process according to an in-motion ranging period comprises performing the ranging process more frequently than the default ranging period.
15. The method of clause 9, wherein the in-motion ranging period is based on a design basis worst case acceleration event.
16. A method for Doppler shift compensation in OFDMA communications, the method comprising:
   measuring a frequency error of an upstream OFDM signal received from a subscriber station;
   performing a ranging process according to a first ranging period when the frequency error on the upstream OFDM signal received from a subscriber station is less than a predetermined limit; and
   performing the ranging process according to a second ranging period when the frequency error on the upstream OFDM signal received from the subscriber station is not less than the predetermined limit;
   wherein the second ranging period is shorter than the first ranging period.
17. The method of clause 16, further comprising:
   reducing the second ranging period when the frequency error on the upstream OFDM signal received from the subscriber station is not less than the predetermined limit.
18. The method of clause 16, wherein the second ranging period is based on a design basis worst case acceleration event.
19. The method of clause 16, wherein the second ranging period is less than the first ranging period and greater than a worst case acceleration ranging period
20. The method of clause 19, wherein the worst case ranging period is based on a ranging period required to successfully handle a design basis worst case acceleration event.
21. The method of clause 16, further comprising:
   continuing to performing the ranging process according to the second ranging period for a duration of a predefined monitoring period.
22. The method of clause 21, further comprising:
   resetting the second ranging period to the default ranging period after the predefined monitoring period elapses.
23. A method for determining the relative velocity of a subscriber station with respect to a basestation, the method comprising:
   sending a query message from a basestation to a subscriber station, the query message requesting a current modulation frequency used by the subscriber station to modulate transmissions;
   receiving a response to the query message, the response including the current modulation frequency;
   determining an offset between the current modulation frequency and a target carrier frequency value; and
   calculating a velocity of the subscriber station based on the offset.
24. The method of clause 23, wherein the current modulation frequency is stored by the subscriber station in a queryable memory.
25. The method of clause 23, wherein the current modulation frequency is stored by the subscriber station in a management information base.
26. A method for determining the relative velocity of a subscriber station with respect to a basestation, the method comprising:
   sending a query message from a basestation to a subscriber station, the query message requesting a value of a carrier frequency adjustment applied by the subscriber station to an uplink carrier with respect to a downlink carrier;
   receiving a response to the query message, the response including the value of the carrier frequency adjustment;
   calculating a velocity of the subscriber station based on the value of the carrier frequency adjustment.
27. The method of clause 26, wherein the value of the carrier frequency adjustment is stored by the subscriber station in a queryable memory.
28. The method of clause 26, wherein the value of the carrier frequency adjustment is stored by the subscriber station in a management information base.
29. A method for determining the relative velocity of a subscriber station with respect to a basestation, the method comprising:
   determining a frequency error of an upstream OFDM signal received from the subscriber station;
   transmitting a frequency adjustment instruction to the subscriber station based on the frequency error;
   maintaining a running sum of frequency adjustments transmitted to the subscriber station;
   determining an offset between a current carrier frequency and a target carrier frequency value based on the running sum; and
   calculating a velocity of the subscriber station based on the offset.

## Claims

1. A method for determining the relative velocity of a subscriber station with respect to a basestation, the method comprising:
sending a query message from a basestation to a subscriber station, the query message requesting a current modulation frequency used by the subscriber station to modulate transmissions;
receiving a response to the query message, the response including the current modulation frequency;
determining an offset between the current modulation frequency and a target carrier frequency value; and
calculating a velocity of the subscriber station based on the offset.

2. The method of claim 1, wherein the current modulation frequency is stored by the subscriber station in a queryable memory.

3. The method of claim 1, wherein the current modulation frequency is stored by the subscriber station in a management information base.

4. A method for determining the relative velocity of a subscriber station with respect to a basestation, the method comprising:
sending a query message from a basestation to a subscriber station, the query message requesting a value of a carrier frequency adjustment applied by the subscriber station to an uplink carrier with respect to a downlink carrier;
receiving a response to the query message, the response including the value of the carrier frequency adjustment;
calculating a velocity of the subscriber station based on the value of the carrier frequency adjustment.

5. The method of claim 4, wherein the value of the carrier frequency adjustment is stored by the subscriber station in a queryable memory.

6. The method of claim 4, wherein the value of the carrier frequency adjustment is stored by the subscriber station in a management information base.

7. A method for determining the relative velocity of a subscriber station with respect to a basestation, the method comprising:
determining a frequency error of an upstream OFDM signal received from the subscriber station;
transmitting a frequency adjustment instruction to the subscriber station based on the frequency error;
maintaining a running sum of frequency adjustments transmitted to the subscriber station;
determining an offset between a current carrier frequency and a target carrier frequency value based on the running sum; and
calculating a velocity of the subscriber station based on the offset.
